# EUROPEAN PATENT SPECIFICATION

(11) **EP 3 633 946 B1**
(45) Date of publication and mention of the grant of the patent: **23.03.2022**
(21) Application number: 18198046.7
(22) Date of filing: 01.10.2018
(51) Int. Cl.: H04L 29/06, H04L 12/24, H04L 12/28, H04J 14/02, H04Q 11/00, G06F 21/57

(54) **METHOD AND SYSTEMS FOR ASSOCIATING SUBSCRIBER IDENTIFICATION INFORMATION WITH A RESIDENTIAL GATEWAY IDENTIFIER**
VERFAHREN UND SYSTEME ZUR ZUORDNUNG VON TEILNEHMERIDENTIFIZIERUNGSINFORMATIONEN MIT EINEM RESIDENTIAL-GATEWAY-IDENTIFIKATOR
PROCÉDÉ ET SYSTÈMES PERMETTANT D'ASSOCIER DES INFORMATIONS D'IDENTIFICATION D'ABONNÉS AVEC UN IDENTIFICATEUR DE PASSERELLE RÉSIDENTIELLE

(43) Date of publication of application: 08.04.2020
(73) Proprietor: Nokia Solutions and Networks Oy, 02610 Espoo (FI)
(72) Inventor: FRANKEN, Gijs, 2132 JE Hoofdorp (NL); BOTEA, Marcela, 300158 Timisoara (RO); KAPTAN, Ibrahim, Istanbul (TR); SCHOETERS, Kris, 2018 Antwerpen (BE)
(74) Representative: Novagraaf Technologies

(56) References cited:
- EP-A1- 1 796 311
- EP-A1- 1 833 224
- US-A1- 2015 074 245
- US-B1- 7 885 549

## Description

### Field of Invention

The field of the invention relates to installation of network terminations of a shared medium communication link and installation of a residential gateway (RGW) connected to a subscriber-side network termination (SSNT). Particular embodiments relate to a method for associating subscriber identification information with an identifier of a subscriber-side network termination (SSNT) and with an identifier of the residential gateway (RGW), to an authentication and registration server system for associating subscriber identification information with an identifier of a subscriber-side network termination (SSNT) and with an identifier of the residential gateway (RGW), to a network system therefor, and to a computer program product.

### Background

Subscriber-side installation of network terminations of shared medium communication links, wherein multiple subscribers can be connected to a same provider-side communication port, is complicated. Such installation requires a way for the provider to identify a network termination of a given subscriber - that is, the provider must be able to associate the subscriber with an identifier of the subscriber-side network termination.

More specifically, for a Passive Optical Network (PON) service activation, both the layer 2 (SSNT) and layer 3 (RGW) services must be activated for a comprehensive broadband service. Today, the layer 2 (SSNT) and layer 3 (RGW) activations are two separate activities each with their own activation procedure. The layer 2 (SSNT) activation is performed through the OLT and the associated management system. The layer 3 (RGW) is activated through the ACS, a separate management system. These systems are typically not integrated in a service provider network.

EP3157223A1 is considered the closest prior art and discloses a method for associating subscriber identification with an identifier of a subscriber-side network termination. The method comprises intercepting an internet access request from a subscriber terminal (ST) by using a captive network.

Document US 2015/074275 A1 describes a method for facilitating a connection between a public internet protocol (IP) address allocated remote management server (RMS) and private IP address allocated customer-premise equipment (CPE) devices that are serviced by a home gateway device (HGD).

Document EP 1796311 A1 describes complementary residential gateway management where system management functions are remotely performed on customer premises equipment (CPE), such a residential gateway, even if the CPE has not been authenticated or dynamically allocated an IP address or otherwise is not in a state that enables normal communication with the network.

Document EP 1833224 A1 describes triggering DHCP actions from IEEE 802.1x state changes. A client device obtains an Internet Protocol (IP) address in response to completion of an authentication protocol process. The IP address can be provided in accordance with, for example, the dynamic host configuration protocol (DHCP). The authentication protocol can be, for example, that which is defined by the IEEE 802.1x standard. When a client device detects completion of the 802.1x authentication process, it issues a DHCP request to the network.

Currently, this activation is typically a complex procedure usually requiring a technician to come on customer premises to install and activate the PON CPE. This is not only the case for new subscriptions but also for maintenance and end of life replacements. This is causing high cost and quality issues for a telecom service provider to provide PON based broadband services to their customers.

Alternatively, service providers (in short 'providers', a.k.a. operators) require subscribers (a.k.a. end-users) to provide an identifier of their network termination using out-of-band infrastructure (i.e. a communication infrastructure independent from the shared medium communication link), since the communication link to be installed is not yet operational. This approach is cumbersome.

### Summary

It is an aim of embodiments of the invention to simplify installation of shared medium communication links and simplify installation of residential gateways.

According to a first aspect of the invention, there is provided a method according to claim 1.

Embodiments of the method according to the invention are based *inter alia* on the insight that internet access can (initially) be restrained to a limited network (which can also be a 'captive network') by the intercepting, in order to determine the identifiers of the SSNT and the RGW, and the subscriber identification information (e.g. the subscriber's username and password, a unique key encoded on a physical device owned by the subscriber, or input of the subscriber identification information on a ST owned by trained technician on the subscriber's premises), based on communication from and to the subscriber-side network termination. The skilled person is wellaware of how to implement interception of user requests and redirection of the user request in any of a number of ways, e.g. using DNS (Domain Name System) Redirection, IP (Internet Protocol) Redirection, HTTP (HyperText Transfer Protocol) Redirection, restricted scope addressing, traffic blocking, etc., e.g. as described in Kumari et al. "Internet Engineering Task Force Internet-Draft: DHCP Captive-Portal" of January 13, 2014.

Thus, embodiments of the method according to the invention simplify installation of shared medium communication links and to simplify installation of residential gateways, by making it easy for the subscriber to install the network termination and the RGW by herself. Furthermore, the installation can be performed in one simple service activation step at the end user premises. The dependency on an out-of-band infrastructure (e.g. the availability of an internet-connected mobile phone) is overcome. Also, the cost of activating a new subscriber is reduced, since there is no need for a truck roll (i.e. the need to dispatch a technician in a vehicle such as a truck (whence the name) to install, move, or somehow reconfigure an item of equipment or a wire and cable system) anymore. Further, the risk of errors due to the complexity of current procedures is reduced.

In an embodiment, the method comprises configuring the residential gateway (RGW) in order to provide to the subscriber at least one service to which that subscriber is subscribed, based on the association of the subscriber identification information and the identifier of the RGW. In this manner, the provider can provide to the subscriber the services to which the subscriber has subscribed (and only those).

In an embodiment, the method comprises provisioning the subscriber-side network termination (SSNT) in order to provide to the subscriber at least one service to which that subscriber is subscribed, based on the association of the subscriber identification information and the identifier of the SSNT. In this manner, the provider can provide to the subscriber the services to which the subscriber has subscribed (and only those).

In an embodiment, the method comprises connecting the residential gateway (RGW) to the subscriber-side network termination (SSNT) and, via the shared medium communication link (SMCL), to the provider-side network termination (PSNT); and requesting allocation of a network address for the ST. The method further comprises: connecting the ST to the RGW, allocating a network address to a subscriber terminal (ST) connected to the RGW and, via the SSNT and the SMCL, to the PSNT; associating the allocated network address with the identifier of the SMCL. In this manner, the subscriber need only connect a subscriber terminal, such as a personal computer or a smartphone or the like, to her subscriber-side network termination for automatic installation.

In an embodiment, the method comprises rerouting the BOOT-inform message, sent to an automatic configuration server ACS URL to an ACS process; based on the rerouting, determining the identifier of the RGW; and providing the identifier of the RGW to an operator support system (OSS). In this manner, the association between the identifier of the RGW and the subscriber information can be efficiently obtained.

In a further developed embodiment, the method comprises receiving the BOOT-inform message at the ACS URL; and configuring the RGW by the ACS based on information in the OSS.

In an embodiment, the method comprises relaying the requesting of the allocation of a network address and the allocating of the network address; based on the relaying, determining the identifier of the shared medium communication link and the allocated network address; and providing the identifier of the shared medium communication link and the allocated network address to an operator support system. In this manner, the association between the network address for the subscriber terminal and the identifier of the shared medium communication link can be efficiently obtained. The providing of the identifier of the SMCL and the allocated network address can be done at the same time as the providing of the identifier of the RGW.

In an embodiment, the method comprises connecting the RGW via the subscriber-side network termination (SSNT) to the shared medium communication link (SMCL); and providing the BOOT-inform message to the provider-side network termination (PSNT) via the SMCL. In this manner, the RGW can be setup for performing the remainder of the method.

In a further developed embodiment, the providing comprises examining communication on the shared medium communication link (SMCL) in order to detect a discovery window; and, when the discovery window is detected, sending therein the identifier of the subscriber-side network termination (SSNT) and the identifier of the RGW to the provider-side network termination (PSNT) via the SMCL. In this manner, the identifier of the SSNT and the identifier of the RGW can be provided to the PSNT effectively and unobtrusively.

A 'discovery window' is also known as a 'ranging window', or a 'quiet window', and is used on shared media using time division multiplex access schemes in order to allow newly attached devices to signal their presence without disturbing communication for devices that are already registered.

Alternatively or additionally, the providing comprises sending the identifier of the subscriber-side network termination (SSNT) and the identifier of the RGW to the provider-side network termination (PSNT) via the shared medium communication link (SMCL) using at least one of: a pre-determined frequency division multiplexing frequency or frequency range, a pre-determined code division multiplexing coding scheme, a carrier sense multiple access protocol.

In a specific embodiment, the subscriber-side network termination (SSNT) is an Optical Network Termination, the provider-side network termination (PSNT) is an Optical Line Termination, the identifier of the SSNT is its serial number, the shared medium communication link is a Passive Optical Network communication link, the identifier of the SMCL is its circuit ID, the network address is an Internet Protocol address allocated using the Dynamic Host Configuration Protocol (or alternatively, Stateless Address Auto configuration (SLAAC) protocol), the associating of the allocated network address with the identifier of the SMCL uses the Dynamic Host Configuration Protocol Relay Agent Information Option (or alternatively is based on at least one SLAAC message indicating the allocated network address), the subscriber identification information comprises a unique username of the subscriber and a secret key authenticating that unique username, the RGW is a TR-069 enabled device, and the BOOT-inform message comprises at least a Unique Identifier, Product Class and Serial Number.

According to another aspect of the invention, there is provided an authentication and registration server (ARS) system according to claim 9.

It will be appreciated that the above described features, advantages and considerations also apply, *mutatis mutandis,* for embodiments of the authentication and registration server system.

According to another aspect of the invention, there is provided a network system for associating subscriber identification information with an identifier of a subscriber-side network termination (SSNT). The network system comprises the subscriber-side network termination (SSNT) and a provider-side network termination (PSNT). The PSNT is connected via a shared medium communication link (SMCL) to the SSNT. The PSNT is configured for associating the identifier of the SSNT with an identifier of the SMCL. The network system also comprises a residential gateway (RGW) connected to the SSNT and, via the SMCL, to the PSNT; a subscriber terminal (ST) connected to the RGW; and further comprises a network address allocation server (NAAS) configured for allocating a network address to the subscriber terminal (ST). The network system further comprises an embodiment of the authentication and registration server (ARS) system as described hereinabove.

It will be appreciated that the above described features, advantages and considerations also apply, *mutatis mutandis,* for embodiments of the network system.

In an embodiment, the network system is configured for provisioning the subscriber-side network termination (SSNT) in order to provide to the subscriber at least one service to which that subscriber is subscribed, based on the association of the subscriber identification information and the identifier of the SSNT.

In an embodiment, the subscriber terminal (ST) is configured for: being connected to the subscriber-side network termination (SSNT) via the RGW and, via the shared medium communication link (SMCL), to the provider-side network termination (PSNT); and for requesting allocation of a network address for the ST. Further, at least one of the provider-side network termination (PSNT) and the network address allocation server (NAAS) is configured for associating the allocated network address with an identifier of the SMCL.

In an embodiment, the network system is configured for: rerouting the BOOT-inform message, sent to an automatic configuration server ACS URL to an ACS process; based on the rerouting, determining the identifier of the RGW; and providing the identifier of the RGW to an operator support system (OSS).

In an embodiment, the RGW is connected to, via the subscriber-side network termination (SSNT) the shared medium communication link (SMCL). Also, the RGW is configured for providing the BOOT-inform message to the provider-side network termination (PSNT) via the SMCL.

In an embodiment, the subscriber-side network termination (SSNT) is connected to the shared medium communication link (SMCL). Also, the SSNT is configured for providing the identifier of the SSNT to the provider-side network termination (PSNT) via the SMCL, for association with the identifier of the SMCL.

In a further developed embodiment, the SSNT is configured for: examining communication on the shared medium communication link (SMCL) in order to detect a discovery window; and, when the discovery window is detected, sending therein the identifier of the subscriber-side network termination (SSNT) to the provider-side network termination (PSNT) via the SMCL.

According to another aspect of the invention, there is provided a computer program product, comprising computer-executable instructions for performing a method when the program is run on a computer, the method comprising the steps of any one of the methods described hereinabove. According to yet another aspect of the invention, there is provided a digital data storage medium encoding a machine-executable program of instructions to perform a method, the method comprising the steps of any one of the methods described hereinabove. It will be appreciated that the above described features, advantages and considerations also apply, *mutatis mutandis,* for embodiments of the computer program product and the digital data storage medium, respectively.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a prior art approach;
Figure 2 illustrates schematically an embodiment of a network system according to the invention;
Figures 3A and 3B illustrate schematically a flowchart for an embodiment of a method according to the invention;
Figure 4 illustrates schematically a sequence diagram for an embodiment of a method according to the invention; and
Figure 5 illustrates schematically an embodiment of an authentication and registration server system according to the invention.

### Description of embodiments

Subscriber-side installation of network terminations of shared medium communication links, wherein multiple subscribers can be connected to a same provider-side communication port, is complicated. Such installation requires a way for the provider to identify a network termination of a given subscriber - that is, the provider must be able to associate the subscriber with an identifier of the subscriber-side network termination. An extension of these subscriber-side installations has been realized to include the installation of residential gateways. This has been made possible by enabling the provider to associate the subscriber with an identifier of the residential gateway.

Currently, service providers (in short 'providers', a.k.a. operators) require subscribers (a.k.a. end-users) to provide an identifier of their network termination using out-of-band infrastructure (i.e. a communication infrastructure independent from the shared medium communication link), since the communication link to be installed is not yet operational. This approach is cumbersome.

For example, PON (Passive Optical Networks) ONT (Optical Network Termination, which is a subscriber-side network termination, in other words an equipment terminating the shared medium communication link between the provider and the subscriber at the side of the subscriber) install practice requires the subscriber to scan or enter an ONT serial number (as an identifier of the ONT, usually determined by the manufacturer of the ONT and typically displayed on the outside of the ONT). The scanning of the ONT serial number may for example be done with a mobile app. The mobile app will then register the new ONT along with subscriber identification information on back-end systems of the service provider, from which back-end systems the ONT can then be provisioned with the service or services to which the subscriber is subscribed. A residential gateway (RGW) is a device that allows a local area network (LAN) to connect to a wide area network (WAN) via an ONT. The RGW can be connected to or entirely integrated in an ONT. RGW identifier are typically manually linked to subscriber identity, which is cumbersome and prone to error. The approach of out-of-band infrastructures banks on the availability of a smartphone to the subscriber. In general, these procedures are cumbersome, complicated and errorprone and/or rely on the availability of out-of-band infrastructure, like 3G (third generation), LTE (Long Term Evolution) connectivity, a rented Wi-Fi hotspot, or the like.

There is a global trend towards fiber access for fixed broadband access services and the number of subscribers are increasing rapidly. In most of the cases Passive Optical Networking (PON) technology is used. Service providers are facing high cost and quality issues for adding new subscribers and replacing Customer Premises Equipment (CPE) in case of non-functioning or end-of-life CPE equipment. This is due to the complexity of the process, which require field technicians to perform the installation and activation of the CPE at customer premises, typically in a partial automated process.

The disclosed invention provides a very simple service activation method. Activation of a broadband service on a PON access typically require the activation of two layers each with their functions which reside on one CPE instance or two separate CPE instances, (subscriber-side network termination (SSNT) for layer 2 and RGW for layer 3) . From a standardization perspective and implementation perspective these activations are defined to be done separately through separate systems, each with their own activation and authentication procedure.

With this invention, an extension of the prior art, it is made possible to automate the activation of the SSNT. The extension allows the subscriber or field technician to activate the SSNT and RGW function in one simple step by just entering the user identity/user credentials in a captive portal. This simplifies the service activation process very significantly, reduces the probability of errors, eliminates the need for a smartphone with 3G/4G connectivity and will allow for customer selfinstall. This will provide service providers with reduced cost and improved quality for adding new customers. Another benefit of the invention is that the service provider will not need to pre-register the serial number(s) of the customer-premises equipment (CPE). These serial number(s) will be automatically discovered by the invention and automatically linked to the subscriber identity.

The automation of the layer 2 activation process as done in the prior art will require a captive session to be set up from the SSNT to a portal. This invention is an additional use of this captive session.

This is applicable when a RGW is connected to or integrated in the SSNT, i.e. two separate CPE devices or one integrated CPE device, it does not matter. We assume that the RGW is a TR-069 enabled device and will send at least a BOOT-Inform message when the device becomes active in the 'captive network', which is according to the TR-069 standard.

This invention will automatically correlate the unique RGW identifier to the authenticated subscriber identifier, which applies for both layer 2 and layer 3 activation. This will enable the service provider to link the RGW to the correct subscriber and assign the correct services in a fully automated way. The unique RGW identifier can be defined as the combination of Organizationally Unique Identifier (OUI), Product Class and Serial Number (or any other id as mentioned in the BOOT-Inform message depending on the used Automatic Configuration Server (ACS)). This is indicated as OPN device triplet. In the Provider Network an authentication and registration server (ARS) will do the authentication and run the activation business logic. In the 'captive network' an ACS process will be running to capture OPN data from a first ACS URL request posted by RGW. This ACS process is the network manager that will register the TR-069 device and enable the operator to remotely manage this device.

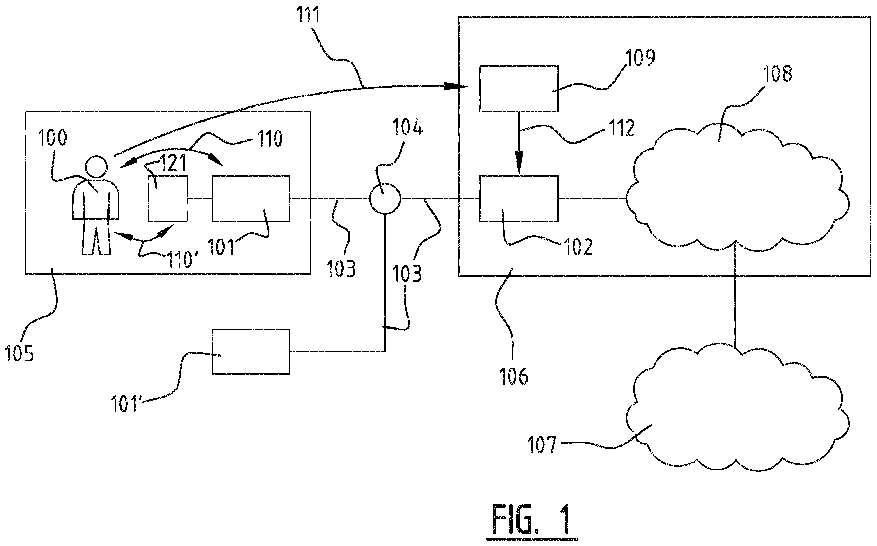

Figure 1 illustrates schematically a prior art approach for the above. The figure shows a subscriber 100 and her Optical Network Termination (ONT) 101 on the subscriber premises 105. The ONT is connected via a passive optical network (PON) 103 (which is a shared medium communication link) to a Optical Line Termination (OLT) 102. In this figure, the PON 103 comprises a splitter 104 linked to another ONT 101'. The figure further shows a provider network 106, in which the OLT 102 is situated, along with a provider access network 108 that is connected to the internet 107, and along with a back-end server 109connected 112 to the OLT 102.

The figure shows the installation of the ONT 101 by the subscriber 100, who has to capture 110 a serial number identifying the ONT 101, and who has to transmit 111 the captured serial number and her identification information to the back-end server 109 using an out-of-band interface, because the PON communication link 103 is not operational yet. Afterwards, the back-end server 109 can (re)configure the OLT 102 in order to provide appropriate services for the subscriber 100.

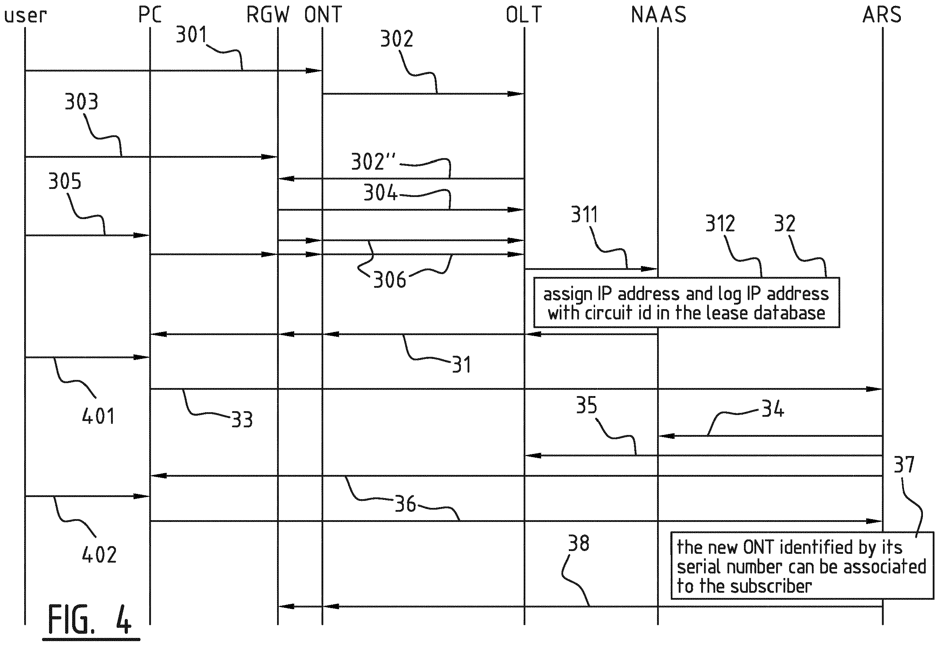

The ONT 101 is further connected to a Residential Gateway (RGW) 121. The RGW 121 can be a separate device or it can be integrated in the ONT 101 device. The function of the RGW 121 can still be distinguished from the function of the ONT 101 if the RGW 121 is integrated in the ONT 101. The figure shows the installation of the RGW 121 by the subscriber 100, who has to capture 110' an identifier identifying the RGW 121, and who has to transmit 111 the captured identifier and her identification information to an Automatic Configuration Server (ACS) using an out-of-band interface, because the PON communication link 103 is not operational yet. Alternatively, the identifier identifying the RGW 121 has been pre-configured into the RGW 121. Afterwards, the ACScan (re)configure the RGW 121 in order to provide appropriate services for the subscriber 100. This reconfiguring will be explained in more detail with the help of figure 4.

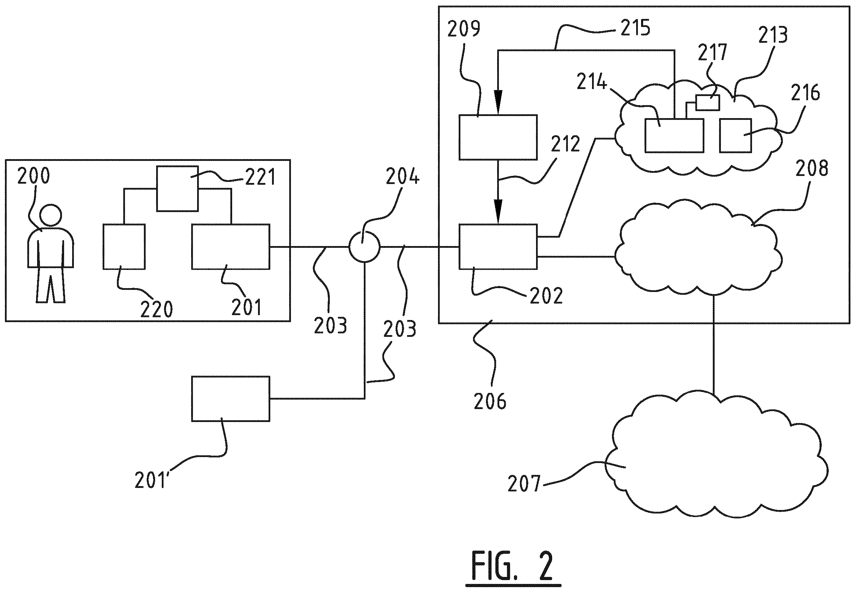

Figure 2 illustrates schematically an embodiment of a network system according to the invention. The figure shows a subscriber 200 and her subscriber-side network termination (SSNT) 201 on the subscriber premises 205, along with a user device 220, such as a personal computer or a smartphone, connected to a residential gateway (RGW) 221. The RGW is connected to or entirely integrated in the SSNT 201. The SSNT 201 is connected via a shared medium communication link (SMCL) 203, which may for example be a passive optical network, or a wireless radio network, or another shared medium communication link, to a provider-side network termination (PSNT) 202. In this figure, the SMCL 203 comprises a splitter 204 linked to another SSNT 201'. The figure further shows a provider network 206, in which the PSNT 202 is situated, along with a provider access network 208 that is connected to the internet 207, and along with a back-end server 209 (for administering the service provider's network) that is connected 212 to the PSNT 202. Further, the figure shows a captive network 213, which is a restricted part of the provider network 206, and which in - in this figure - comprises an authentication and registration server (ARS) system 214,a network address allocation server (NAAS) 216 and a ACS process 217. The figure also shows explicitly how the authentication and registration server (ARS) system 214 is connected 215 to the back-end server 209, although in other embodiments the functionality of the back-end server 209 could be included in the ARS system 214. Figure 2 also explicitly shows how the ACS process 217 is connected to the ARS system 214, although in other embodiments the functionality of the ACS process could be included in the ARS system 214. In some embodiments the ACS process 217 can be seen as an ACS emulator running within the captive network 213. In further developed embodiments, the functionality of the NAAS 216 could additionally or alternatively be included in the ARS system 214.

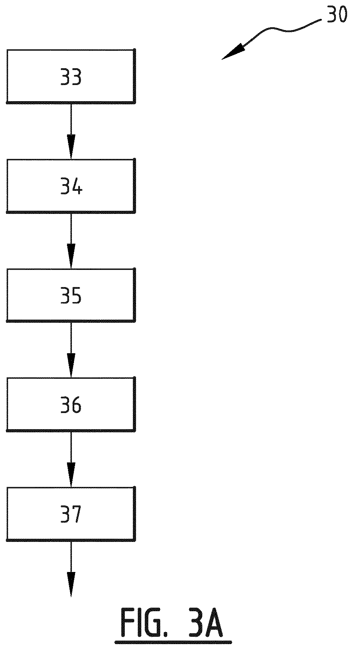

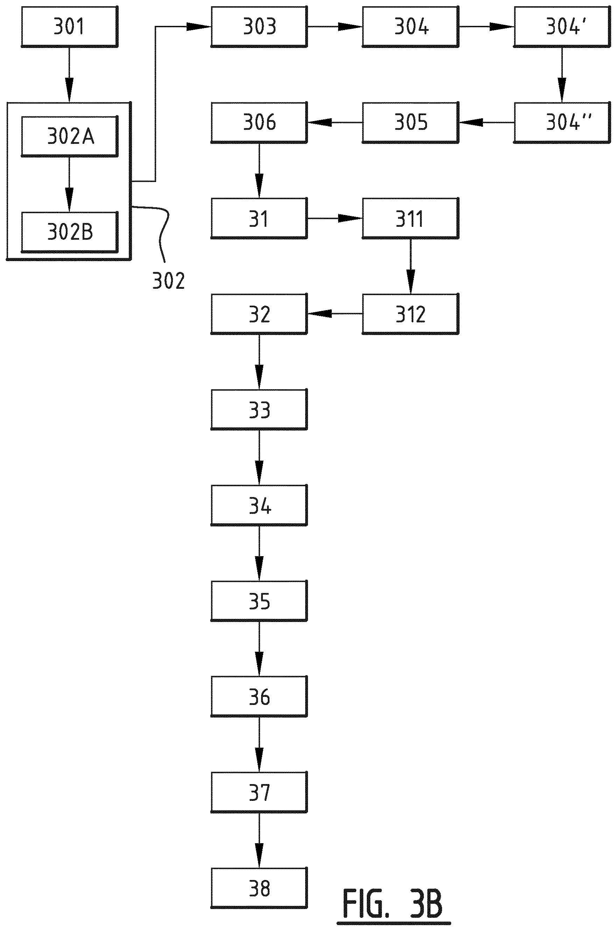

Operation of entities shown in Figure 2 corresponds to the operation described below with reference to Figures 3A and 3B.

Figures 3A and 3B each illustrate schematically a flowchart for an embodiment of a method according to the invention. In Figure 3A, there is shown an embodiment of a method 30 according to the invention, for associating subscriber identification information with an identifier of a subscriber-side network termination (SSNT) 201 and for associating subscriber identification information with an identifier of a residential gateway (RGW) 221, as shown in Figure 2. The RGW 221 is connected to or entirely integrated in the SSNT 201. The SSNT 201 is connected via a shared medium communication link (SMCL) 203 to a provider-side network termination (PSNT) 202. The identifier of the SSNT 201 is associated with an identifier of the SMCL 203, for example by the PSNT 202. The association may be explicit in that two separate pieces of data are coupled in a mapped relationship, or may be implicit in that the SMCL identifier may encode the SSNT identifier (for example, by indirectly or directly indicating rack number, shelf number, slot number, etc.) and may thus allow to deduce the SSNT identifier from the SMCL identifier. Further, the identifier of the SMCL is associated, for example by the PSNT 202 or by the NAAS 216, with a network address allocated (for example by the NAAS 216) to the RGW 221 connected to the SSNT and, via the SMCL, to the PSNT. The method comprises intercepting 33 an internet access request from the RGW 221, the request indicating the allocated network address. The internet access request may e.g. be intended to access the internet 207 via the provider access network 208. The method comprises, based on the indicated network address, determining 34 the associated identifier of the SMCL 203. The method comprises, based on the determined identifier of the SMCL 203, determining 35 the associated identifier of the SSNT 201.

The method comprises obtaining 36 subscriber identification information from a user device 220. The method also comprises associating 37 the obtained subscriber identification information with the determined identifier of the SSNT 201.

In Figure 3B, there is shown another embodiment of a method according to the invention, for associating subscriber identification information with an identifier of a subscriber-side network termination (SSNT) 201 as shown in Figure 2. The SSNT 201 is connected via a shared medium communication link (SMCL) 203 to a provider-side network termination (PSNT) 202. In this embodiment, the PSNT 202 has associated the identifier of the SSNT 201 with an identifier of the SMCL 203, because it is well-situated to do so. For that associating, the method may, in some embodiments, as in the one shown here, comprise connecting 301 the subscriber-side network termination (SSNT) 201 to the shared medium communication link (SMCL) 203, and providing 302 the identifier of the SSNT 201 to the provider-side network termination (PSNT) 202 via the SMCL 203, thus allowing the PSNT 202 to associate the identifiers. Figure 3B further shows a more detailed view of the providing 302, wherein the providing 302 comprises examining 302A communication on the shared medium communication link (SMCL) 203 in order to detect a discovery window, and, when the discovery window is detected, sending 302B therein the identifier of the subscriber-side network termination (SSNT) 201and the identifier of the residential gateway (RGW) to the provider-side network termination (PSNT) 202 via the SMCL 203. The detection of the discovery window allows to notify the PSNT 202 of the SSNT's 201 presence without disturbing other PSNTs 201' that might also be connected to the shared medium communication link (SMCL) 203.

Further, the method as shown here comprises the steps of connecting 303 the RGW 221 to the subscriber-side network termination (SSNT) 201 and, via the shared medium communication link (SMCL) 203, to the provider-side network termination (PSNT) 202. It is clear to the skilled person that this step could be redundant if the RGW 221 is connected to the SSNT 201 at the time of purchasing. The RGW 221, when powered on and after being allocated 302" an IP address, automatically sends 304 a BOOT-inform message to an ACS URL. The BOOT-inform message is then detected 304' by an ACS process 217. After detection 304', the ACS process 217 determines 304" the identifier of the RGW from the BOOT-inform message.

Further, the method as shown here comprises the steps of connecting 305 user device 220 to the subscriber-side network termination (SSNT) 201 and, via the shared medium communication link (SMCL) 203, to the provider-side network termination (PSNT) 202, and requesting 306 allocation of a network address for the ST 220, e.g. from a network address allocation server (NAAS) 216 coupled to the captive network. Further, the method comprises allocating 31 a network address to a subscriber terminal (ST) 220 connected to the SSNT 201 and, via the SMCL 203, to the PSNT 202. The method as shown also comprises relaying 311 the requesting 305 of the allocation of a network address and the allocating 31 of the network address, and, based on the relaying 311, determining 312 the identifier of the shared medium communication link 203 and the allocated network address.

Further, the method comprises associating 32 the allocated network address with the identifier of the SMCL 203. The method comprises intercepting 33 an internet access request from the ST 220, the request indicating the allocated network address. The method comprises, based on the indicated network address, determining 34 the associated identifier of the SMCL 203. The method comprises, based on the determined identifier of the SMCL 203, determining 35 the associated identifier of the SSNT 201. The method comprises obtaining 36 subscriber identification information from the ST 220. The method also comprises associating 37 the obtained subscriber identification information with the determined identifier of the SSNT 201.

Further, the method comprises the optional step of provisioning 38 the subscriber-side network termination (SSNT) 201 in order to provide to the subscriber 200 at least one service to which that subscriber 200 is subscribed, based on the association of the subscriber identification information and the identifier of the SSNT 201. The provisioning 38 may e.g. be performed by the back-end server 209 of Figure 2 through connection 212, at the causation of the authentication and registration server system 214 through connection 215

Figure 4 illustrates schematically a sequence diagram for an embodiment of a method according to the invention. Figure 4 shows a number of specific technologies used for implementing certain steps of the method (and a number of specific technologies used for implementing certain entities of the corresponding system). Nevertheless, the skilled person will understand that these specific technologies are only shown here by way of example, and are intended to limit in no way the scope of the present invention. In particular, it will be evident to the skilled person that other types of shared medium communication links than PON could also be used, such as wireless radio network communication links, or coax, *et cetera.*

Figure 4 shows how a subscriber 200 unpacks her Optical Network Termination (ONT) 201, which is an example subscriber-side network termination (SSNT) 201, and connects 301 that to the shared medium communication link (SMCL) 203, in this example a fibre network 203. Of course, the subscriber 200 also connects the ONT 201 to the power network and powers it on.

Next, the ONT 201 boots up, and signals its presence and its serial number (i.e. an identifier identifying the ONT 201) 302 to an Optical Line Termination (OLT) 202 (which is an example provider-side network termination (PSNT) 202) on the fibre network 203. The signalling can involve examining 302A communication on the SMCL, the detection of a discovery window, and sending 302B the relevant data during the discovery window.

Next, the OLT 202 can associate the ONT's 201 serial number (thus an identifier of the SSNT 201) and an identifier of the SMCL 203, namely the circuit ID of the fibre network line to which the ONT 201 is connected. Also, the newly connected ONT 201 is connected to the captive service network 213 as discussed above, for example by setting up a Virtual Local Area Network (VLAN) providing a logical pipe for communication from the ONT 201 to the OLT 202. This setting up may e.g. be performed by a back-end server 209, which is notified of the new connection of the ONT 201 by the OLT 202.

Next, the subscriber 200 connects 303 a RGW 221 to the ONT 201. In some embodiments the RGW is integrated into the ONT 201 device, and therefore does not have to be connected anymore to the ONT 201. The RGW 221 is powered on 305. This RGW 221 is also connected to the captive service network 213 via the ONT 201 set up for providing a logical pipe for communication from the ONT 201 to the OLT 202. The RGW 221 gets allocated 302" an IP address. The RGW 221 sends 304 a BOOT-inform message to an ACS URL. Preferably, the BOOT-inform message is TR-069 enabled. TR-069 is a technical specification of the Broadband Forum that defines an application layer protocol for remote management of customer-premises equipment (CPE) connected to an Internet Protocol (IP) network. The BOOT-inform message contains at least a unique RGW identifier. Preferably, the unique RGW identifier is defined as the combination of an Organizationally Unique Identifier (OUI), Product Class and Serial Number (or any other id as mentioned in the BOOT-inform message depending on the used Automatic Configuration Server (ACS)). This combination is called the OPN, thus the unique RGW identifier can be called the RGW OPN. The ACS URL and ACS credentials are pre-configured on the RGW. The NAAS 216 in the 'captive portal' network will reroute the BOOT-inform message to an ACS process 217. This ACS process 217 will then capture 304' the BOOT-inform message and determine 304" the RGW OPN. The ACS process 217 will then temporarily store the device IP-address and the unique RGW device identifier OPN. Next, the subscriber 200 connects 305 a personal computer (PC) 220 (which is an example user device 220), e.g. to an Ethernet port of the RGW 221. Then, the PC 220 will request 306' allocation of a network address (e.g. an Internet Protocol (IP) address), for example from a network address allocation server (NAAS) 216 (which may for example be a DHCP server 216, thus using a DHCP request) -PCs 220, when connected to such a network, are typically configured for automatically requesting such a network address allocation. The request 306 passes via the RGW 221 to the ONT 201 and via the OLT 202, which relays it to the NAAS 216 in the captive service network 213 (e.g. using the VLAN). The OLT 202 can insert an identifier of the SMCL 203, in this example the circuit ID defining the line of the fibre network 203 to which the ONT 201 is connected, e.g. using DHCP Option 82 (in full: Dynamic Host Configuration Protocol Relay Agent Information Option) to indicate the circuit ID. The OLT 202 can relay 311 the DHCP requests, together with the RGW OPN to the NAAS 216 in the captive service network 213. The NAAS 216 then assigns a temporary network address (e.g. an IP address) to the PC 220. In the example shown here, the NAAS 216 determines 312 and associates 32 the temporary IP address with the circuit ID (in other words, the allocated network address with the identifier of the SMCL 203), e.g. in its lease database. Alternatively, the association (and storing) thereof could be done by the authentication and registration server system 214, or even by the OLT 202. Then, the temporary IP address is allocated 31 to the PC 220, via the reverse path.

Next, the subscriber 200 opens a browser or the like on the PC 220 and goes to any page, thus triggering an internet access request 401. This request 401 is intercepted 33 to the captive service network 213, in particular to the authentication and registration server system 214. The request 401, being an internet access request 401, indicates the temporary IP address of the PC 220, since this is the source address of the request 401. Then, the authentication and registration server system 214 queries 34 the NAAS 216 for the circuit ID matching the temporary IP address, and queries 35 the OLT 202 for the ONT's 201 serial number matching the circuit ID. In other words, the authentication and registration server system 214 determines the ONT's 201 serial number (in other words, the identifier of the SSNT 201) based on associations stored at the authentication and registration server system 214, or elsewhere (e.g. at the NAAS 216 or at the OLT 202).

Next, the authentication and registration server system 214 provides to the subscriber 200 an authentication page (e.g. by displaying on the PC 220 a web page that requests the subscriber's 200 username and password, as agreed upon earlier by the provider and the subscriber 200, or as indicated on the ONT 201.). The subscriber 200 then provides 402 the required identification information (for example by filling in a web page configured for proving her identity, based on a unique username and a password associated therewith) which is obtained 36 by the authentication and registration server system 214.

Next, the obtained subscriber identification information can be associated by the authentication and registration server system (ARS) 214 with the determined identifier of the ONT 201 (i.e. its serial number). By this association, the ARS 214 will be able to send a request to the ACS process 217 with the device temporary IP-address as key to retrieve the RGW OPN. This is possible as the ARS 214 now knows to which temporary IP-address the SSNT 201 is assigned to. The ARS 214 now knows the subscriber id and its assigned RGW OPN and can send this information to an Operator Support System (OSS). An OSS is a computer system used by a telecommunications service provider to manage its networks.

After the association of the obtained subscriber identification information with the determined identifier of the ONT 201 and after sending the request to the ACS process 217, the captive service network 213 is terminated. After the termination of the captive service network 213, the SSNT 201 is allocated a final IP-address assigned via the PSNT 202.

This association allows the provider to retrieve from its database the one or more services (e.g. in the context of Triple Play services) to which the subscriber 200 is subscribed, and to provision 38 these one or more services in the ONT 201.

The RGW 221 device will resend (after a reboot of device, if needed) the BOOT-inform message to the ACS. The ACS will then do the necessary device on-boarding steps and can query the OSS to retrieve the subscriber identifier belonging to the on-boarding RGW 221 device OPN. The OSS will then be able to indicate the services that need to be configured on this RGW 221 by the ACS. Next, the OSS will instruct the ACS to configure the indicated services on the RGW 221. After the configuration of the indicated services on the RGW, the subscriber is able to use these indicated services.

Thus, embodiments of the method overcome the requirement of scanning or entering a serial number, or of entering a subscriber ID in the ONT 201. Instead, when a new ONT 201 is connected to the network 203, the ONT 201 is detected and it will be provisioned with a captive service. The captive service network 213 is a closed network that offers limited IP (Internet Protocol) connectivity. Connectivity is limited to access to an authentication and registration server system 214. When the subscriber 200 connects a PC (Personal Computer) 220 to this newly connected ONT 201, the PC 220 will obtain an IP address from a DHCP (Dynamic Host Configuration Protocol) server 216 present in the captive service network 213. The OLT 202 to which the ONT 201 is connected will insert option 82 in the DHCP dialog. The DHCP server 216 will log 52 the option 82, together with the assigned IP address in its lease database 50. When the subscriber 200 opens a browser 401, it will be redirected to the authentication and registration server system 216. The authentication and registration server system 216 will acquire the IP address of the PC 220 that connects. The authentication and registration server system 216 will then query the DHCP server 216 for the circuit ID matching this IP address. The self authentication and registration server system 216 can now use the circuit ID to query the OLT 202 for the matching ONT 201 serial number. This procedure allows the authentication and registration server system 216 to acquire the ONT's 201 serial number without cumbersome interaction with the subscriber 200.

Alternatively, the ARS system 214 may retrieve the association between the circuit ID and/or the network address on the one hand and the identifier of the ONT 201 on the other hand from a dedicated database instead of from the NAAS 216 and/or from the OLT 202. The database can be updated by, for example, the NAAS 216, the OLT 202, or both.

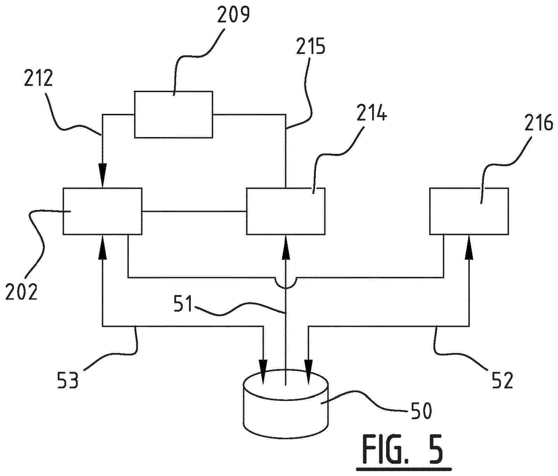

Figure 5 illustrates schematically an embodiment of an authentication and registration server (ARS) system according to the invention. This embodiment corresponds *mutatis mutandis* with the embodiment of the network system as shown in Figure 2. Figure 5 in particular shows a database 50 which is configured to store a number of associations, e.g. associations between network addresses and identifiers of SMCLs 203. To that end, the database 50 may be connected 51 to the authentication and registration server system 214 such that the ARS system 214 can read from the database, and/or may be connected 52 to the optional NAAS 216 such that that can store therein the association between the allocated network address and the SMCL 203 identifier, and/or may be connected 53 to the PSNT 202 such that that can store the associations, or even to a number of these or all of these.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein the instructions perform some or all of the steps of the above-described methods. The program storage devices may be, e.g., digital memories, magnetic storage media such as a magnetic disks and magnetic tapes, hard drives, or optically readable digital data storage media. The embodiments are also intended to cover computers programmed to perform the steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A method for associating subscriber identification information with an identifier of a residential gateway, RGW (221), and an identifier of a subscriber-side network termination, SSNT (201), the SSNT (201) being connected via a shared medium communication link, SMCL (203), to a provider-side network termination, PSNT (202), wherein the identifier of the SSNT (201) is associated with an identifier of the SMCL (203), and wherein the identifier of the SMCL (203) is associated with a network address allocated to a subscriber terminal, ST (220), connected to the SSNT (201) via the residential gateway, RGW (221), and, via the SMCL (203), to the PSNT (202), the PSNT (202) being situated in a provider network (206) along with a provider access network (208), a restricted part of the provider network (206) forming a captive network (213); the method comprising
- sending, by the residential gateway RGW (221), at least a BOOT-inform message comprising the identifier of the RGW (221) when the RGW (221) becomes active in the captive network (213);
- intercepting said at least a BOOT-inform message from the RGW (221);
- based on the intercepted BOOT-inform message, determining the identifier of the RGW (221);
- intercepting an internet access request from the ST (220), the request indicating the allocated network address;
- based on the indicated network address, determining the identifier of the SMCL (203);
- based on the determined identifier of the SMCL, determining the identifier of the SSNT (201);
- obtaining subscriber identification information from the ST (220); and
- associating the obtained subscriber identification information with the determined identifier of the SSNT (201) and with the determined identifier of the RGW (221).

2. The method of claim 1, the method comprising:
- configuring the residential gateway, RGW, in order to provide to the subscriber at least one service to which that subscriber is subscribed, based on the association of the subscriber identification information and the identifier of the RGW.

3. The method of any one of the previous claims, the method comprising:
- connecting the residential gateway, RGW, to the subscriber-side network termination, SSNT, and, via the shared medium communication link, SMCL, to the provider-side network termination, PSNT;
- connecting the ST to the RGW;
- requesting allocation of a network address for the ST;
- allocating a network address to the ST, connected to the RGW and, via the SSNT and the SMCL, to the PSNT; and
- associating the allocated network address with the identifier of the SMCL.

4. The method of any one of the previous claims, the method comprising:
- rerouting the BOOT-inform message, sent to an automatic configuration server ACS URL to an ACS process;
- based on the rerouting, determining the identifier of the RGW ; and
- providing the identifier of the RGW to an operator support system,

5. The method of claim 4, the method comprising, after the operator support system is provided with information:
- receiving the BOOT-inform message at the ACS URL; and
- configuring the RGW by the ACS based on information in the OSS.

6. The method of any one of the previous claims, the method comprising:
- connecting the RGW via the subscriber-side network termination, SSNT, to the shared medium communication link, SMCL; and
- providing the BOOT-inform message to the provider-side network termination, PSNT, via the SMCL.

7. The method of claim 6, wherein the providing comprises:
- examining communication on the shared medium communication link, SMCL, in order to detect a discovery window; and
- when the discovery window is detected, sending therein the identifier of the subscriber-side network termination, SSNT, and the identifier of the RGW to the provider-side network termination, PSNT, via the SMCL.

8. The method of any one of the previous claims, wherein:
- the subscriber-side network termination, SSNT, is an Optical Network Termination;
- the provider-side network termination, PSNT, is an Optical Line Termination;
- the identifier of the SSNT is its serial number;
- the shared medium communication link is a Passive Optical Network communication link;
- the identifier of the SMCL is its circuit ID;
- the network address is an Internet Protocol address allocated using the Dynamic Host Configuration Protocol;
- the associating of the allocated network address with the identifier of the SMCL uses the Dynamic Host Configuration Protocol Relay Agent Information Option;
- the subscriber identification information comprises a unique username of the subscriber and a secret key for authenticating that unique username;
- the RGW is a TR-069 enabled device;
- the BOOT-inform message comprises at least a unique Identifier, Product Class and Serial Number.

9. An authentication and registration server, ARS, system for associating subscriber identification information with an identifier of a residential gateway, RGW, and an identifier of a subscriber-side network termination, SSNT, the SSNT being connected via a shared medium communication link, SMCL, to a provider-side network termination, PSNT,
wherein the identifier of the SSNT is associated with an identifier of the SMCL, and wherein the identifier of the SMCL is associated with a network address allocated to a subscriber terminal, ST, connected to the SSNT via the RGW and, via the SMCL to the PSNT, the PSNT being situated in a provider network, along with a provider access network, a restricted part of the provider network forming a captive network; the ARS system comprising at least one server configured for:
- intercepting at least a BOOT-inform message from the RGW, that has been sent by the RGW when the RGW became active in the captive network and that comprises the identifier of the RGW;
- based on the intercepted BOOT-inform message, determining the identifier of the RGW;
- intercepting an internet access request from the ST, the request indicating the allocated network address;
- based on the indicated network address, determining the identifier of the SMCL;
- based on the determined identifier of the SMCL, determining the identifier of the SSNT;
- obtaining subscriber identification information from the ST; and
- associating the obtained subscriber identification information with the determined identifier of the SSNT and with the determined identifier of the RGW.

10. A network system for associating subscriber identification information with an identifier of a subscriber-side network termination, SSNT;
the network system comprising:
- the subscriber-side network termination, SSNT;
- a provider-side network termination, PSNT, the PSNT being connected via a shared medium communication link, SMCL, to the SSNT, the PSNT being configured for associating the identifier of the SSNT with an identifier of the SMCL;
- a residential gateway, RGW, connected to the SSNT and, via the SMCL, to the PSNT;
- a subscriber terminal, ST;
- a network address allocation server, NAAS, configured for allocating a network address to the ST; and
- an authentication and registration server, ARS, system according to claim 9.

11. The network system of any one of the claims 9-10, wherein the ST is configured for:
- being connected to the subscriber-side network termination, SSNT, via the RGW and, via the shared medium communication link, SMCL, to the provider-side network termination, PSNT; and for
- requesting allocation of a network address for the ST; and
wherein at least one of the provider-side network termination, PSNT, and the network address allocation server, NAAS, is configured for associating the allocated network address with an identifier of the SMCL.

12. The network system of any one of the claims 9-11, configured for:
- rerouting the BOOT-inform message, sent to an automatic configuration server ACS URL to an ACS process;
- based on the rerouting, determining the identifier of the RGW and the allocated network address; and
- providing the allocated network address and the identifier of the RGW to an operator support system, OSS.

13. The network system of any one of the claims 9-12, wherein:
- the RGW is connected to, via the subscriber-side network termination, SSNT, the shared medium communication link, SMCL; and
- the RGW is configured for providing the BOOT-inform message to the provider-side network termination, PSNT, via the SMCL.

14. The network system of claim 13, wherein the SSNT is configured for:
- examining communication on the shared medium communication link, SMCL, in order to detect a discovery window; and
- when the discovery window is detected, sending therein the identifier of the subscriber-side network termination, SSNT, and the identifier of the RGW to the provider-side network termination, PSNT, via the SMCL.

15. A computer program product, comprising computer-executable instructions for performing a method when the program is run on a system of computers, the method comprising the steps of any one of the methods of the claims 1-7.

## Patentansprüche

1. Verfahren zum Verknüpfen von Teilnehmeridentifikationsinformationen mit einer Kennung eines Residential Gateways, RGW, (221) und einer Kennung eines Subscriber-Side-Network Termination (Netzabschluss auf der Teilnehmerseite), SSNT, (201), wobei der SSNT (201) über eine Shared Medium Communication Link (gemeinsam genutzte Medienkommunikationsverbindung), SMCL, (203) mit einem Provider-Side Network Termination (Netzabschluss auf der Anbieterseite), PSNT, (202) verbunden ist, wobei die Kennung des SSNT (201) mit einer Kennung der SMCL (203) verknüpft ist und wobei die Kennung der SMCL (203) mit einer Netzwerkadresse verknüpft ist, die einem Subscriber Terminal (Teilnehmerendgerät), ST, (220) zugewiesen ist, das mit dem SSNT (201) über das Residential Gateway, RGW, (221) und über die SMCL (203) mit dem PSNT (202) verbunden ist, wobei der PSNT (202) sich in einem Anbieternetzwerk (206) gemeinsam mit einem Anbieterzugangsnetzwerk (208) befindet, wobei ein eingeschränkter Teil des Anbieternetzwerks (206) ein Captive-Netzwerk (213) bildet; wobei das Verfahren umfasst:
- Senden, durch das Residential Gateway, RGW, (221), mindestens einer BOOT-Informationsnachricht, die die Kennung des RGW (221) umfasst, wenn das RGW (221) in dem Captive-Netzwerk (213) aktiv wird;
- Auffangen der mindestens einen BOOT-Informationsnachricht von dem RGW (221);
- basierend auf der aufgefangenen BOOT-Informationsnachricht, Bestimmen einer Kennung des RGW (221);
- Auffangen einer Internet-Zugriffsanforderung von dem ST (220), wobei die Anforderung die zugewiesene Netzwerkadresse angibt;
- basierend auf der angegebenen Netzwerkadresse, Bestimmen der Kennung der SMCL (203);
- basierend auf der bestimmten Kennung der SMCL, Bestimmen der Kennung des SSNT (201);
- Erhalten von Teilnehmeridentifikationsinformationen von dem ST (220); und
- Verknüpfen der erhaltenen Teilnehmeridentifikationsinformationen mit der bestimmten Kennung des SSNT (201) und mit der bestimmten Kennung des RGW (221) .

2. Verfahren nach Anspruch 1, wobei das Verfahren umfasst:
- Konfigurieren des Residential Gateways, RGW, um dem Teilnehmer mindestens einen Dienst bereitzustellen, den der Teilnehmer abonniert hat, basierend auf der Verknüpfung der Teilnehmeridentifikationsinformationen und der Kennung des RGW.

3. Verfahren nach einem der vorhergehenden Ansprüche, wobei das Verfahren umfasst:
- Verbinden des Residential Gateways, RGW, mit dem Subscriber-Side Network Termination, SSNT, und über die Shared Medium Communication Link, SMCL, mit der Provider-Side Network Termination, PSNT;
- Verbinden des ST mit dem RGW;
- Anfordern der Zuweisung einer Netzwerkadresse für das ST;
- Zuweisen einer Netzwerkadresse zu dem ST, das mit dem RGW und, über den SSNT und die SMCL, mit dem PSNT verbunden ist; und
- Verknüpfen der zugewiesenen Netzwerkadresse mit der Kennung der SMCL.

4. Verfahren nach einem der vorhergehenden Ansprüche, wobei das Verfahren umfasst:
- Umleiten der an einen URL eines Automatic Configuration Servers (automatischer Konfigurationsserver), ACS, gesendeten BOOT-Informationsnachricht zu einem ACS-Prozess;
- basierend auf dem Umleiten, Bestimmen der Kennung des RGW; und
- Bereitstellen der Kennung des RGW für ein Operator Support System, OSS.

5. Verfahren nach Anspruch 4, wobei das Verfahren, nachdem die Informationen dem Operator Support System bereitgestellt wurden, umfasst:
- Empfangen der BOOT-Informationsnachricht an dem ACS URL; und
- Konfigurieren des RGW durch den ACS basierend auf Informationen in dem OSS.

6. Verfahren nach einem der vorhergehenden Ansprüche, wobei das Verfahren umfasst:
- Verbinden des RGW über den Subscriber-Side Network Termination, SSNT, mit der Shared Medium Communication Link, SMCL; und
- Bereitstellen der BOOT-Informationsnachricht für den Provider-Side Network Termination, PSNT, über die SMCL.

7. Verfahren nach Anspruch 6, wobei das Bereitstellen umfasst:
- Untersuchen der Kommunikation auf der Shared Medium Communication Link, SMCL, um ein Entdeckungsfenster zu detektieren; und
- wenn das Entdeckungsfenster detektiert wird, Senden der Kennung der Subscriber-Side Network Termination, SSNT, und der Kennung des RGW an den Provider-Side Network Termination, PSNT, über die SMCL.

8. Verfahren nach einem der vorhergehenden Ansprüche wobei:
- der Subscriber-Side Network Termination, SSNT, ein Optical Network Termination (optischer Netzabschluss) ist;
- der Provider-Side Network Termination, PSNT, ein Optical Line Termination (optischer Leitungsabschluss) ist;
- die Kennung des SSNT seine Seriennummer ist;
- die Shared Medium Communication Link eine Passive Optical Network (passives optisches Netzwerk) Kommunikationsverbindung ist;
- die Kennung der SMCL ihre Schaltungs-ID ist;
- die Netzwerkadresse eine Internet-Protokoll-Adresse ist, die unter Verwendung des Dynamic Host Configuration Protocols zugewiesen wird;
- das Verknüpfen der zugewiesenen Netzwerkadresse zu der Kennung der SMCL die Dynamic Host Configuration Protocol Relay Agent Information Option verwendet;
- die Teilnehmeridentifikationsinformationen einen eindeutigen Benutzernamen des Teilnehmers und einen geheimen Schlüssel zum Authentifizieren dieses eindeutigen Benutzernamens umfassen;
- das RGW eine TR-069-fähige Vorrichtung ist;
- die BOOT-Informationsnachricht mindestens eine eindeutige Kennung, Produktklasse und Seriennummer umfasst.

9. Authentifizierungs- und Registrierungsserver, ARS, System zum Verknüpfen von Teilnehmeridentifikationsinformationen mit einer Kennung eines Residential Gateways, RGW, und einer Kennung eines Subscriber-Side Network Termination, SSNT, wobei der SSNT über eine Shared Medium Communication Link, SMCL, mit einem Provider-Side Network Termination, PSNT, verbunden ist, wobei die Kennung des SSNT mit einer Kennung der SMCL verknüpft ist und wobei die Kennung der SMCL mit einer Netzwerkadresse verknüpft ist, die einem Benutzerendgerät, ST, zugewiesen ist, das über das RGW mit dem SSNT und über die SMCL mit dem PSNT verbunden ist, wobei der PSNT sich gemeinsam mit einem Anbieterzugangsnetzwerk in einem Anbieternetzwerk befindet, wobei ein eingeschränkter Teil des Anbieternetzwerks ein Captive-Netzwerk bildet; wobei das ARS-System mindestens einen Server umfasst, der konfiguriert ist zum:
- Auffangen mindestens einer BOOT-Informationsnachricht von dem RGW, die von dem RGW gesendet wurde, als das RGW in dem Captive-Netzwerk aktiv wurde, und die die Kennung des RGW umfasst;
- basierend auf der aufgefangenen BOOT-Informationsnachricht, Bestimmen der Kennung des RGW;
- Auffangen einer Internetzugriffsanforderung von dem ST, wobei die Anforderung die zugewiesene Netzwerkadresse angibt;
- basierend auf der angegebenen Netzwerkadresse, Bestimmen der Kennung der SMCL;
- basierend auf der bestimmten Kennung der SMCL, Bestimmen der Kennung des SSNT;
- Erhalten von Teilnehmeridentifikationsinformationen von dem ST; und
- Verknüpfen der erhaltenen Teilnehmeridentifikationsinformationen mit der bestimmten Kennung des SSNT und mit der bestimmten Kennung des RGW.

10. Netzwerksystem zum Verknüpfen von Teilnehmeridentifikationsinformationen mit einer Kennung eines Subscriber-Side Network Termination, SSNT;
wobei das Netzwerksystem umfasst:
- den Subscriber-Side Network Termination, SSNT;
- einen Provider-Side Network Termination, PSNT, wobei der PSNT über eine Shared Medium Communication Link, SMCL, mit dem SSNT verbunden ist, wobei der PSNT konfiguriert ist, um die Kennung des SSNT mit einer Kennung der SMCL zu verknüpfen;
- ein Residential Gateway, RGW, das mit dem SSNT und über die SMCL mit dem PSNT verbunden ist;
- ein Teilnehmerendgerät, ST;
- einen Network Address Allocation Server (Netzwerkadressen-Zuweisungsserver), NAAS, der zum Zuweisen einer Netzwerkadresse zu dem ST konfiguriert ist; und
- ein Authentication and Registration Server, ARS, System nach Anspruch 9.

11. Netzwerksystem nach einem der Ansprüche 9 bis 10, wobei das ST konfiguriert ist, um:
- mit dem Subscriber-Side Network Termination, SSNT, über das RGW und über die Shared Medium Communication Link, SMCL, mit dem Provider-Side Network Termination, PSNT, verbunden zu werden;
und zum
- Anfordern der Zuweisung einer Netzwerkadresse für das ST; und
wobei mindestens einer von dem Provider-Side Network-Termination, PSNT, und dem Network Address Allocation Server, NAAS, zum Verknüpfen der zugewiesenen Netzwerkadresse mit einer Kennung der SMCL konfiguriert ist.

12. Netzwerksystem nach einem der Ansprüche 9 bis 11, das konfiguriert ist zum:
- Weiterleiten der an einen Automatic Configuration Server ACS URL gesendeten BOOT-Informationsnachricht an einen ACS-Prozess;
- basierend auf dem Weiterleiten, Bestimmen der Kennung des RGW und der zugewiesenen Netzwerkadresse; und
- Bereitstellen der zugewiesenen Netzwerkadresse und der Kennung des RGW für ein Operator Support System, OSS.

13. Netzwerksystem nach einem der Ansprüche 9 bis 12, wobei:
- der RGW über den Subscriber-Side Network Termination, SSNT, mit der Shared Medium Communication Link, SMCL, verbunden ist; und
- das RGW konfiguriert ist, um die BOOT-Informationsnachricht dem Provider-Side Network Termination, PSNT, über die SMCL bereitzustellen.

14. Netzwerksystem nach Anspruch 13, wobei der SSNT konfiguriert ist zum:
- Untersuchen von Kommunikation auf der Shared Medium Communication Link, SMCL, um ein Entdeckungsfenster zu detektieren; und
- wenn das Entdeckungsfenster detektiert wird, darin Senden der Kennung des Subscriber-Side Network Termination, SSNT, und der Kennung des RGW an den Provider-Side Network Termination, PSNT, über die SMCL.

15. Computerprogrammprodukt, das compterausführbare Anweisungen zum Durchführen eines Verfahrens umfasst, wenn das Programm auf einem System von Computern ausgeführt wird, wobei das Verfahren die Schritte nach einem der Verfahren nach Anspruch 1 bis 7 umfasst.

## Revendications

1. Procédé pour associer des informations d'identification d'abonné à un identifiant d'une passerelle résidentielle, RGW (221), et à un identifiant d'une terminaison de réseau côté abonné, SSNT (201), la SSNT (201) étant connectée via une liaison de communication à support partagé, SMCL (203), à une terminaison de réseau côté fournisseur, PSNT (202), dans lequel l'identifiant de la SSNT (201) est associé à un identifiant de la SMCL (203), et dans lequel l'identifiant de la SMCL (203) est associé à une adresse réseau allouée à un terminal d'abonné, ST (220), connecté à la SSNT (201) via la passerelle résidentielle, RGW (221), et, via la SMCL (203), à la PSNT (202), la PSNT (202) étant située dans un réseau de fournisseur (206) ainsi qu'un réseau d'accès de fournisseur (208), une partie restreinte du réseau de fournisseur (206) formant un réseau captif (213) ; le procédé comprenant :
- l'envoi, par la passerelle résidentielle RGW (221), d'au moins un message BOOT-inform (information d'amorçage) comprenant l'identifiant de la RGW (221) lorsque la RGW (221) devient active dans le réseau captif (213) ;
- l'interception dudit au moins un message BOOT-inform en provenance de la RGW (221) ;
- sur la base du message BOOT-inform intercepté, la détermination de l'identifiant de la RGW (221) ;
- l'interception d'une demande d'accès Internet depuis le ST (220), la demande indiquant l'adresse réseau allouée ;
- sur la base de l'adresse réseau indiquée, la détermination de l'identifiant de la SMCL (203) ;
- sur la base de l'identifiant déterminé de la SMCL, la détermination de l'identifiant de la SSNT (201) ;
- l'obtention d'informations d'identification d'abonné à partir du ST (220) ; et
- l'association des informations d'identification d'abonné obtenues à l'identifiant déterminé de la SSNT (201) et à l'identifiant déterminé de la RGW (221).

2. Procédé selon la revendication 1, le procédé comprenant :
- la configuration de la passerelle résidentielle, RGW, afin de fournir à l'abonné au moins un service auquel cet abonné est abonné, sur la base de l'association des informations d'identification d'abonné et de l'identifiant de la RGW.

3. Procédé selon l'une quelconque des revendications précédentes, le procédé comprenant :
- la connexion de la passerelle résidentielle, RGW, à la terminaison de réseau côté abonné, SSNT, et, via la liaison de communication à support partagé, SMCL, à la terminaison de réseau côté fournisseur, PSNT ;
- la connexion du ST à la RGW ;
- la demande de l'allocation d'une adresse réseau pour le ST ;
- l'allocation une adresse réseau au ST, connecté à la RGW et, via la SSNT et la SMCL, à la PSNT ; et
- l'association de l'adresse réseau allouée à l'identifiant de la SMCL.

4. Procédé selon l'une quelconque des revendications précédentes, le procédé comprenant :
- le reroutage du message BOOT-inform, envoyé à une URL de serveur de configuration automatique ACS vers un processus ACS ;
- sur la base du reroutage, la détermination de l'identifiant de la RGW ; et
- la fourniture de l'identifiant de la RGW à un système de support d'opérateur, OSS.

5. Procédé selon la revendication 4, le procédé comprenant, après que le système de support d'opérateur s'est vu fournir des informations :
- la réception du message BOOT-inform au niveau de l'URL ACS ; et
- la configuration de la RGW par l'ACS sur la base d'informations dans l'OSS.

6. Procédé selon l'une quelconque des revendications précédentes, le procédé comprenant :
- la connexion de la RGW via la terminaison de réseau côté abonné, SSNT, à la liaison de communication à support partagé, SMCL ; et
- la fourniture du message BOOT-inform à la terminaison de réseau côté fournisseur, PSNT, via la SMCL.

7. Procédé selon la revendication 6, dans lequel la fourniture comprend :
- l'examen de la communication sur la liaison de communication à support partagé, SMCL, afin de détecter une fenêtre de découverte ; et
- lorsque la fenêtre de découverte est détectée, l'envoi dans celle-ci de l'identifiant de la terminaison de réseau côté abonné, SSNT, et de l'identifiant de la RGW à la terminaison de réseau côté fournisseur, PSNT, via la SMCL.

8. Procédé selon l'une quelconque des revendications précédentes, dans lequel :
- la terminaison de réseau côté abonné, SSNT, est une terminaison de réseau optique ;
- la terminaison de réseau côté fournisseur, PSNT, est une terminaison de ligne optique ;
- l'identifiant de la SSNT est son numéro de série ;
- la liaison de communication à support partagé est une liaison de communication de réseau optique passif ;
- l'identifiant de la SMCL est son ID de circuit ;
- l'adresse réseau est une adresse de protocole Internet allouée en utilisant le protocole de configuration d'hôte dynamique ;
- l'association de l'adresse réseau allouée à l'identifiant de la SMCL utilise l'option d'information d'agent de relais de protocole de configuration d'hôte dynamique ;
- les informations d'identification d'abonné comprennent un nom d'utilisateur unique de l'abonné et une clé secrète pour authentifier ce nom d'utilisateur unique ;
- la RGW est un appareil compatible TR-069 ;
- le message BOOT-inform comprend au moins un identifiant unique, une classe de produit et un numéro de série.

9. Système de serveur d'authentification et d'enregistrement, ARS, pour associer des informations d'identification d'abonné à un identifiant d'une passerelle résidentielle, RGW, et à un identifiant d'une terminaison de réseau côté abonné, SSNT, la SSNT étant connectée via une liaison de communication à support partagé, SMCL, à une terminaison de réseau côté fournisseur, PSNT, dans lequel l'identifiant de la SSNT est associé à un identifiant de la SMCL, et dans lequel l'identifiant de la SMCL est associé à une adresse réseau allouée à un terminal d'abonné, ST, connecté à la SSNT via la RGW et, via la SMCL à la PSNT, la PSNT étant située dans un réseau de fournisseur, ainsi qu'un réseau d'accès de fournisseur, une partie restreinte du réseau de fournisseur formant un réseau captif ; le système ARS comprenant au moins un serveur configuré pour :
- intercepter au moins un message BOOT-inform en provenance de la RGW, qui a été envoyé par la RGW lorsque la RGW devenait active dans le réseau captif et qui comprend l'identifiant de la RGW ;
- sur la base du message BOOT-inform intercepté, déterminer l'identifiant de la RGW ;
- intercepter une demande d'accès Internet depuis le ST, la demande indiquant l'adresse réseau allouée ;
- sur la base de l'adresse réseau indiquée, déterminer l'identifiant de la SMCL ;
- sur la base de l'identifiant déterminé de la SMCL, déterminer l'identifiant de la SSNT ;
- obtenir des informations d'identification d'abonné à partir du ST ; et
- associer les informations d'identification d'abonné obtenues à l'identifiant déterminé de la SSNT et à l'identifiant déterminé de la RGW.

10. Système de réseau pour associer des informations d'identification d'abonné à un identifiant d'une terminaison de réseau côté abonné, SSNT ;
le système de réseau comprenant :
- la terminaison de réseau côté abonné, SSNT ;
- une terminaison de réseau côté fournisseur, PSNT, la PSNT étant connectée via une liaison de communication à support partagé, SMCL, à la SSNT, la PSNT étant configurée pour associer l'identifiant de la SSNT à un identifiant de la SMCL ;
- une passerelle résidentielle, RGW, connectée à la SSNT et, via la SMCL, à la PSNT ;
- un terminal d'abonné, ST ;
- un serveur d'allocation d'adresse réseau, NAAS, configuré pour allouer une adresse réseau au ST ; et
- un système de serveur d'authentification et d'enregistrement, ARS, selon la revendication 9.

11. Système de réseau selon l'une quelconque des revendications 9 et 10, dans lequel le ST est configuré pour :
- être connecté à la terminaison de réseau côté abonné, SSNT, via la RGW et, via la liaison de communication à support partagé, SMCL, à la terminaison de réseau côté fournisseur, PSNT ; et pour
- demander l'allocation d'une adresse réseau pour le ST ; et
dans lequel au moins l'un de la terminaison de réseau côté fournisseur, PSNT, et du serveur d'allocation d'adresse réseau, NAAS, est configuré pour associer l'adresse réseau allouée à un identifiant de la SMCL.

12. Système de réseau selon l'une quelconque des revendications 9 à 11, configuré pour :
- rerouter le message BOOT-inform, envoyé à une URL de serveur de configuration automatique ACS vers un processus ACS ;
- sur la base du reroutage, déterminer l'identifiant de la RGW et l'adresse réseau allouée ; et
- fournir l'adresse réseau allouée et l'identifiant de la RGW à un système de support d'opérateur, OSS.

13. Système de réseau selon l'une quelconque des revendications 9 à 12, dans lequel :
- la RGW est connectée, via la terminaison de réseau côté abonné, SSNT, à la liaison de communication à support partagé, SMCL ; et
- la RGW est configurée pour fournir le message BOOT-inform à la terminaison de réseau côté fournisseur, PSNT, via la SMCL.

14. Système de réseau selon la revendication 13, dans lequel la SSNT est configurée pour :
- examiner la communication sur la liaison de communication à support partagé, SMCL, afin de détecter une fenêtre de découverte ; et
- lorsque la fenêtre de découverte est détectée, envoyer dans celle-ci l'identifiant de la terminaison de réseau côté abonné, SSNT, et l'identifiant de la RGW à la terminaison de réseau côté fournisseur, PSNT, via la SMCL.

15. Produit de programme informatique, comprenant des instructions exécutables par ordinateur pour effectuer un procédé lorsque le programme est exécuté sur un système d'ordinateurs, le procédé comprenant les étapes de l'un quelconque des procédés selon les revendications 1 à 7.
